Europäisches Patentamt

European Patent Office

Office européen des brevets

(19)

(11) Veröffentlichungsnummer: **0 015 382**
**B1**

(12) ## EUROPÄISCHE PATENTSCHRIFT

(45) Veröffentlichungstag der Patentschrift:
06.04.83

(51) Int. Cl.³: **C 09 K 11/08, C 09 K 11/42,**
**C 09 K 11/44, C 09 K 11/447**

(21) Anmeldenummer: **80100494.6**

(22) Anmeldetag: **01.02.80**

(54) **Lumineszenter Leuchtstoff auf Basis von mit Mangan dotiertem Zinksilikat und Verfahren zu dessen Herstellung.**

(30) Priorität: **05.03.79 US 17521**

(43) Veröffentlichungstag der Anmeldung:
**17.09.80 Patentblatt 80/19**

(45) Bekanntmachung des Hinweises auf die Patenterteilung:
**06.04.83 Patentblatt 83/14**

(84) Benannte Vertragsstaaten:
**DE FR GB**

(56) Entgegenhaltungen:
**BE-A-506 426**
**BE-A-516 892**
**GB-A-536 305**
**GB-A-629 155**
**US-A-2 398 629**
**US-A-2 607 014**

**Journal of Chemical Physics, Band 23, Nr. 1, Januar 1955, Y. Kotera: «Activations by anions in the Oxi-acid phosphors»**

(73) Patentinhaber: **International Business Machines Corporation, Armonk, N.Y. 10504 (US)**

(72) Erfinder: **Chang, Ifay Fay, 2 Ridgewood Terrace, Chappaqua, N.Y. 10514 (US)**
Erfinder: **Shafer, Merrill Wilbert, 105 Loder Road, Yorktown Heights, N.Y. 10598 (US)**

(74) Vertreter: **Möhlen, Wolfgang, Dipl.-Ing., c/o International Business Machines Corporation Zürich Patent Operations Säumerstrasse 4, CH-8803 Rüschlikon/ZH (CH)**

# Lumineszenter Leuchtstoff auf Basis von mit Mangan dotiertem Zinksilikat und Verfahren zu dessen Herstellung

Die Erfindung betrifft einen lumineszenten Leuchtstoff auf der Basis von mit Mangan dotiertem Zinksilikat ($Zn_2SiO_4$:Mn), sowie ein Verfahren zu dessen Herstellung.

Mit Mangan aktiviertes Zinksilikat (Handelsname «P1») ist ein sehr wirkungsvoller Phosphor oder Leuchtstoff, der grün emittiert und nur noch von mit Kupfer aktiviertem Zinksulfid übertroffen wird. In Anzeigevorrichtungen mit Kathodenstrahlröhren wird P1 viel gebraucht. Wenn dem mit Mangan aktivierten Zinksilikat noch Arsen zugesetzt wird, zeigt dieser Leuchtstoff («P 39») bei Kathodo-Lumineszenz eine lange Abklingdauer in der Grössenordnung von 150 msec beim 10%-Punkt. Obwohl der letztgenannte Leuchtstoff weitgehend bei Kathodenstrahlröhren für Speicherzwecke oder in Anzeigevorrichtungen gebraucht wird, weiss man doch verhältnismässig wenig davon, welche Rolle das Arsen in dem Silikatsystem spielt.

Aus den belgischen Patentschriften BE-A-506 426 und BE-A-516 892 sind auch luminiszente Leuchtstoffe auf der Basis von Zinksilikat bekannt, die weiterhin noch entweder Aluminium oder Gallium enthalten, oder mit Mangan dotiert sind und zusätzlich Phosphor enthalten.

Es ist eine Aufgabe der Erfindung, lumineszente Leuchtstoffe mit einer Reihe von Zusammensetzungen anzugeben, die einen hohen Wirkungsgrad aufweisen und deren Abklingzeit nach Wunsch eingestellt werden kann.

Der erfindungsgemässe Leuchtstoff ist durch die Merkmale des Patentanspruches 1 gekennzeichnet. Weiterhin wird ein Verfahren zu seiner Herstellung angegeben.

Ausführungsbeispiele der erfindungsgemässen Leuchtstoffe enthalten in gleicher Konzentration Kombinationen von Oxiden von Elementen der Gruppen IIIA und VA des Periodischen Systems, wie beispielsweise $AlPO_4$, $GaPO_4$, $BPO_4$, $AlAsO_4$, $GaAsO_4$ und $BAsO_4$. Diese zusammengesetzten Oxide substituieren einen Teil des $SiO_2$ in einem vergleichbaren $Zn_2SiO_4$:Mn Leuchtstoff.

Für die Ausführung der Erfindung wird durch Festkörperreaktionen eine Reihe von festen Lösungen synthetisch hergestellt, die man in ein System $Zn_2SiO_4$-«$Zn_2(M^{+3}_{0,5}M^{+5}_{0,5}) O_4$» einordnen kann. $M^{+3}$ und $M^{+5}$ bezeichnen Ionen aus den Gruppen IIIA und VA des Periodischen Systems der Elemente. «$Zn_2(M^{+3}_{0,5}M^{+5}_{0,5}) O_4$» ist hier absichtlich in Anführungszeichen gesetzt, um damit anzudeuten, dass diese Verbindung oder Zusammensetzung nur eine hypothetische Verbindung ist, welche in Wirklichkeit nicht synthetisch hergestellt wird. Diese Grösse oder Bezeichnung von festen Lösungen mit mehreren Kombinationen von $M^{+3}$ und $M^{+5}$ wird aus praktischen Gründen für die Definition der Erfindung so festgesetzt. Die Lumineszenzeigenschaften der mit Mangan aktivierten Silikatleuchtstoffe, die erfindungsgemäss mit IIIA-VAElementen substituiert sind, wurden

untersucht. Diese mit Mangan aktivierten Materialien zeigen die grüne Emission der zweiwertigen Mangan-Ionen ($Mn^{++}$) und sind für die Anwendung in lumineszenten Leuchtstoffen gut geeignet.

Im Vergleich zu dem bekannten P1 Leuchtstoff ($Zn_2SiO_4$:Mn) wird der Wirkungsgrad wesentlich verbessert, wenn man einen Teil des $SiO_2$ mit Kombinationen von verschiedenen Oxiden von Elementen der Gruppen IIIA und VA substituiert, beispielsweise mit Aluminium (Al) und Phosphor (P), um so einen Stoff der Zusammensetzung $Zn_{2-y} Mn_y Si_{1-2x}Al_xP_xO_4$ zu gewinnen. Der Wirkungsgrad der Photolumineszenz von Leuchtstoffen nach der Erfindung zeigt eine starke Abhängigkeit von der Konzentration x der substituierenden IIIA-VAElemente. Der höchste Wirkungsgrad wird etwa in dem Bereich von x = 0,25 bis 1,5% erzielt. Messungen der Kathodo-Lumineszenz und der Abklingzeiten zeigen, dass solche Materialien bessere Eigenschaften haben als die bekannten Zinksilikate, wobei bei vergleichbaren Abklingeigenschaften ein besserer Wirkungsgrad der Kathodo-Lumineszenz erzielt wird.

Fig. 1 ist ein räumliches Phasendiagramm der Zusammensetzung der festen Lösung des Systems $ZnO - SiO_2 - M^{+3} M^{+5} O_4$. Dabei bedeuten $M^{+3}$ Elemente der Gruppe IIIA und $M^{+5}$ Elemente der Gruppe VA des Periodischen Systems. Die ausgezogene Linie zwischen zwei markierten Punkten zeigt den möglichen Bereich der Zusammensetzung.

Fig. 2 zeigt Daten der erfindungsgemässen Leuchtstoffe, wobei die Fig. 2A eine graphische Darstellung der Löslichkeit in Abhängigkeit von der Temperatur und die Fig. 2B eine graphische Darstellung der Gitterkonstanten von $Zn_2Si_{1-2x}Al_xP_xO_4$ ist. Das Mass der Abszisse ist der prozentuale molare Anteil an $Zn_2Al_{0,5}P_{0,5}O_4$.

Fig. 3 zeigt eine Reihe von Kurven, welche die Photolumineszenzspektren des erfindungsgemässen Leuchtstoffes $Zn_{1,98}Mn_{0,02}Si_{1-2x} Al_xP_xO_4$ darstellen.

Fig. 4 ist eine graphische Darstellung der Abklingkurven der Kathodo-Lumineszenz des erfindungsgemässen Leuchtstoffes $Zn_{1,98}Mn_{0,02}Si_{0,98}Al_{0,01}P_{0,01}O_4$ im Vergleich zu den bekannten Leuchtstoffen P1 und P39.

Ausführliche Messungen der Photolumineszenz und der Phosphoreszenz von Materialien wurden ausgeführt, wie sie für die Herstellung von erfindungsgemässen Leuchtstoffen verwendet werden. Es wurde beobachtet, dass das Maximum der $Mn^{++}$-Lumineszenz sich nach grösseren Wellenlängen verschiebt, sich in der Intensität verändert und mit der Zeit abfällt als eine Funktion der Konzentration an «$Zn_2(M^{+3}_{0,5}M^{+5}_{0,5})O_4$». So wurde eine bemerkenswert lange Abklingdauer der Phosphoreszenz bei der Konzentration von 1 mol.% an «$Zn_2(M^{+3}_{0,5}M^{+5}_{0,5})O_4$» gemessen. Augenscheinlich gibt es zwei Abklingprozesse, von denen einer expontiell ist und der andere ein langsamer Abfall von geringer Intensität ist, der minutenlang andauert.

Unter den bekannten Leuchtstoffen ist das mit Mangan aktivierte Zinksilikat ein grün emittierender kathodolumineszenter Leuchtstoff von grossem Wirkungsgrad wie er beispielsweise durch R.C. Alig et al in J. Electrochem. Soc. 124, 1136, 1977 beschrieben ist oder durch W. Lehmann in J. Electrochem. Soc. 118, 1164, 1971. Als Mineral ist dieser Leuchtstoff seit vielen Jahren als Willemit bekannt. R.C. Herrman et al verwenden die Willemit-Terminologie in Phys. Rev. 59, 79, 1941. Unter den handelsfähigen Produkten ist es als P1 bekannt und beschrieben, beispielsweise durch die Publikation No. 16-C vom November 1975 des Electronic Industries Association Electron Tube Council. Aussergewönlich lange Abklingzeiten werden erreicht, wenn P1 gleichzeitig mit Arsen (As) dotiert ist. Dieser Leuchtstoff ist unter dem Handelsnamen «P39» bekannt. Sowohl P1 als auch P39 werden weitgehend in vielen Kathodenstrahlröhren für die Darstellung von Informationen und auch in Speicherröhren benutzt, weil sie einen hohen Wirkungsgrad haben, beachtliche Widerstandsfähigkeit gegen das Einbrennen von Elektronenstrahlen und die Eigenschaften langer Abklingzeit. Trotz der weitehenden Verwendung dieser bekannten Leuchtstoffe seit langen Zeiten wurden doch wenige systematische Untersuchungen dazu unternommen, ihre Eigenschaften weiter zu verbessern oder die Prozesse der Lumineszenz besser zu verstehen.

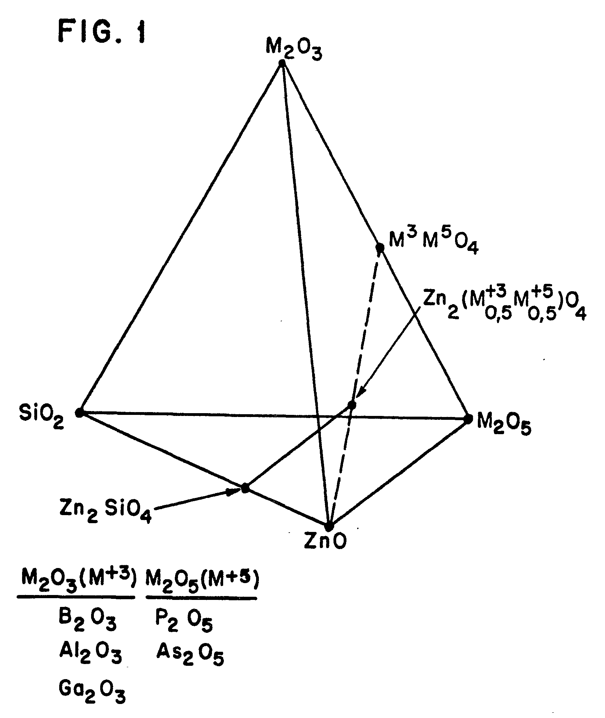

Für die Ausführung der vorliegenden Erfindung wird ein Teil des $SiO_2$ in dem $Zn_2SiO_4$ durch verschiedene Kombinationen von Oxiden von Elementen der Gruppen IIIA und VA ersetzt, die als Modellstrukturen von $SiO_2$ mit den Gittereigenschaften verträglich sind. Weiter unten wird der Einfluss der Substitution von $M^{+3}M^{+5}O_4$ im einzelnen beschrieben. Fig. 1 zeigt ein Phasendiagramm, das die Zusammensetzungen darstellt, welche durch die Ausführung der Erfindung erhalten werden können.

Der Wirkungsgrad der Lumineszenz ist stark von der Substitution mit $M^{+3}M^{+5}O_4$ abhängig. Beispielsweise wurde der höchste Wirkungsgrad erzielt, wenn die Konzentration etwa 0,25% bis 1,5% des $SiO_2$ betrug. Die lumineszenten Leuchtstoffe gemäss der Erfindung zeigen merklich höhere Wirkungsgrade als die bekannten Leuchtstoffe wie beispielsweise P1. Auch haben sie vergleichbare oder bessere Eigenschaften bezüglich der Abklingdauer.

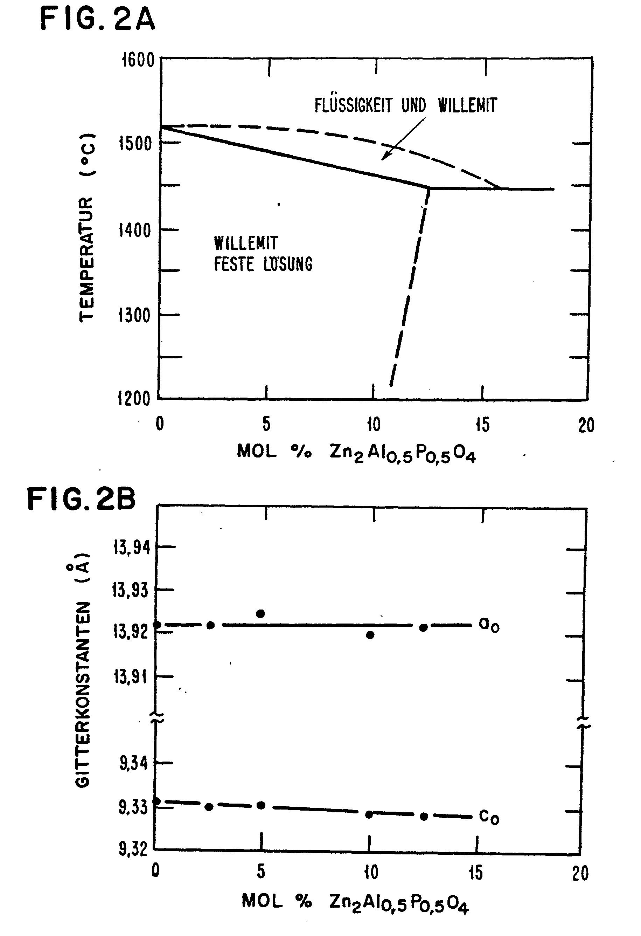

In der Kristallchemie übliche Verfahren wurden benutzt, um systematisch das $SiO_2$ durch $M^{+3}M^{+5}O_4$, beispielsweise durch $AlPO_4$ zu ersetzen. Die Leuchtstoffe wurden synthetisch hergestellt durch Verfahren von Festkörperreaktionen. Die Ausgangsmaterialien für die Proben, beispielsweise $ZnCO_3$, $MnCO_3$, $SiO_2$ und $AlPO_4$, wurden erst bei 805°C kalziniert und anschliessend noch einmal bei 1000°C. Dann wurden sie gepresst und mehrere Male bei höheren Temperaturen gebrannt (in einigen Fällen bis zu 1450°C), bis ein einphasiges Produkt mit Willemitstruktur gebildet war. Mittels Mikrostrukturanalysen und Röntgenstrahlbeugung an pulverisierten Proben wurden die Phase eindeutig identifiziert. Metallographische Verfahren mussten angewendet werden, weil bei diesen hohen Reaktionstemperaturen die Pellets oder Probekügelchen ausserordentlich dicht zusammengesintert wurden. Um die Zusammensetzungen endgültig bestimmen zu können, wurden auch Messungen des Gewichtsverlustes durchgeführt und Analysen mit Elektronenstrahlen. Die Oxide aus Elementen der Gruppen IIIA und VA wurden synthetisch durch ein Verfahren hergestellt, das ähnlich dem ist, das durch E.C. Shafer et al. in J. Am. Ceram. Soc. 39, 330, 1956 beschrieben ist und in Z. Kristallographie, 108, 263, 1956. Durch dieses Verfahren wurde im $Zn_2SiO_4$ ein begrenzter Anteil fester Lösung von «$Zn_2(M^{+3}_{0,5}M^{+5}_{0,5})O_4$» gebildet. Die reine Legierung «$Zn_2(M^{+3}_{0,5}M^{+5}_{0,5})O_4$», beispielsweise $Zn_2Al_{0,5}P_{0,5}O_4$ konnte jedoch nicht synthetisch hergestellt werden. Die Fig. 2A ist ein Phasendiagramm, das den begrenzten Bereich der Löslichkeit etwa anzeigt. Die Grenze liegt bei etwa 15%. Die für diese Legierung festgestellten Gitterkonstanten $a_0$ und $c_0$ sind für diesen Bereich in der Fig. 2B dargestellt.

Die nach dem beschriebenen Verfahren hergestellten Leuchtstoffe nach der Erfindung sind im allgemeinen weisse, dichte, einphasige Festkörper, welche Photolumineszenz mit grüner $Mn^{++}$-Emission mit einem Maximum bei 5230Å zeigen. Vergleichbare grüne $Mn^{++}$-Emission wird durch A.L.N. Stevels et al. in J. Luminescence, 8, 443, 1974 beschrieben. Weitere Veröffentlichungen erfolgen durch D.T. Palumbo et al. in J. Electrochem. Soc. 117, 1184, 1970, durch E. Nagy in J. Opt. Soc. Am. 40, 407, 1950 und durch R.E. Shrader in J. Opt. Soc. Am. 39, 699, 1949.

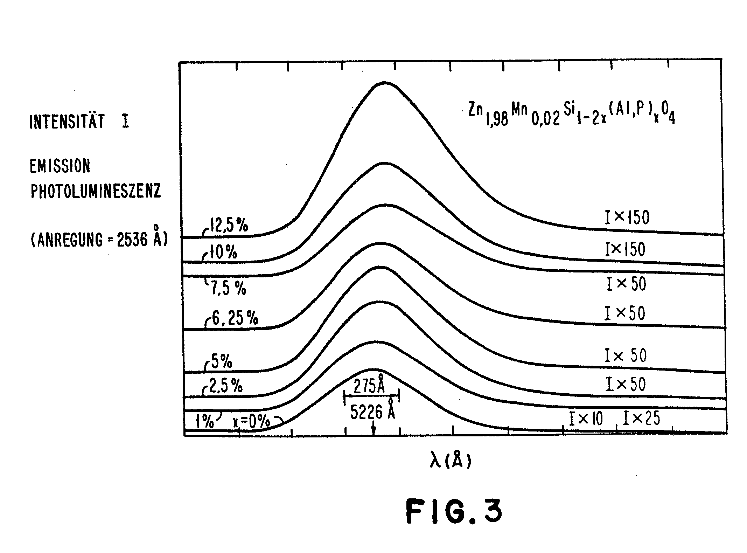

Die Fig. 3 zeigt in einer Kurvenschar die Photolumineszenzspektren einer Reihe von mit 2% Mangan (Mn) dotierten erfindungsgemässen Leuchtstoffen, wobei der Gehalt an $AlPO_4$ von 0 bis 12,5% variierte. Das mit 2536Å angeregte Emissionsband wird mit zunehmenden Mengen von substituierendem $AlPO_4$ zu längeren Wellenlängen hin verschoben. Ähnliche Verschiebungen werden auch beobachtet bei Anregung mit 3021Å. Jede Kurve in der Fig. 3 ist mit einem Massstabfaktor versehen, der ebenfalls zeigt, dass die Maximalintensität der Photolumineszenz sich mit der Konzentration von $AlPO_4$ ändert. Der grösste Wert des Wirkungsgrades der Photolumineszenz dieser Serie von Leuchtstoffen erscheint bei einer Konzentration von etwa x = 1%. Mit einer anderen Gruppe von erfindungsgemäss präparierten Leuchtstoffen wurden Messungen gemacht, wobei die Mn-Konzentration Werte zwischen 0,25 und 2% hatte. Diese zeigten übereinstimmend eine hohe Ausbeute an Photolumineszenz für Beispiele von erfindungsgemässen Leuchtstoffen mit einer $AlPO_4$-Konzentration von x = 0,25 bis 1,5%. Die Reaktionstemperatur für die Bildung der Phase der Willemitstruktur wird durch die Zugabe von $AlPO_4$ herabgesetzt, beispielsweise um etwa 50°C bei einer Zugabe von 5%.

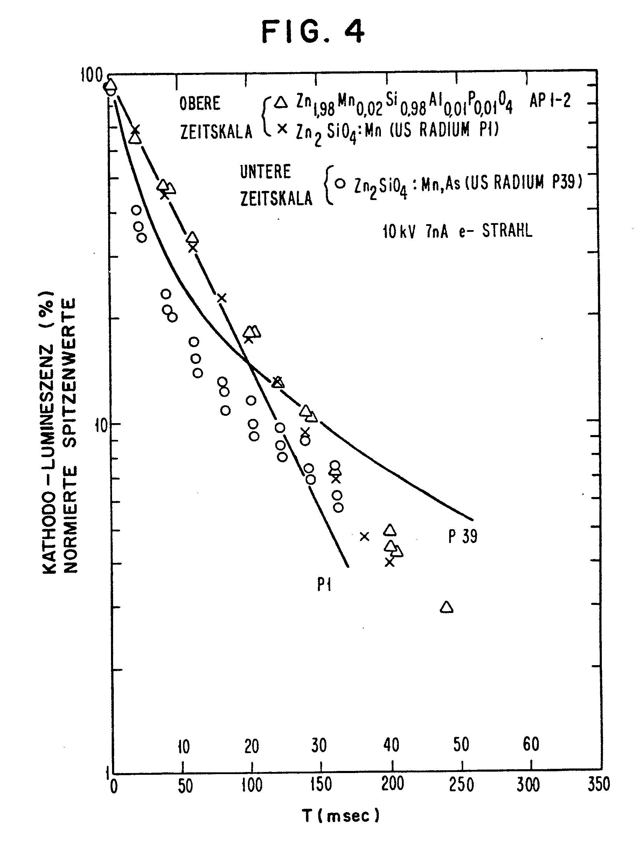

Einige Beispiele von erfindungsgemässen lumineszenten Leuchtstoffen wurden pulverisiert und auf einen Leuchtschirm aufgebracht wie Vergleichsbeispiele mit bekannten Leuchtstoffen P1 und P39. Mit diesen handelsüblichen Silikat-Leuchtstoffen wurden ebenso wie mit den erfindungsgemässen Materialien mit substituiertem $AlPO_4$ Vergleichsmessungen des Wirkungsgrades der Kathodo-Lumineszenz und der Abklingeigenschaften gemacht. In der Fig. 4 wird die Intensität der Kathodo-Lumineszenz als eine Funktion der Zeit für ein Beispiel eines erfindungsgemässen Leuchtstoffes mit 2% Mn und 1% $AlPO_4$ mit den Eigenschaften von handelsüblichen Leuchtstoffen P1 und P39 verglichen. In der Figur ist die Abklingintensität auf die Ausgangsintensität bzw. den Dauerzustandswert normiert. Die Abklingeigenschaften dieser Probenbeispiele können durch ihre Abfallzeit auf 10% charakterisiert werden, beispielsweise 28,5 msec für das Beispiel nach der Erfindung, 27 msec für P1 und 110 msec für P39. Die Messung der Absolutwerte des Wirkungsgrades der Lumineszenz erfolgte durch Messung der Helligkeit der Kathodo-Lumineszenz einer erfindungsgemässen Leuchtstoffschicht in Transmission.

Mit der Anregung durch einen Elektronenstrahl von 10 KeV eines erfindungsgemässen Leuchtstoffes mit einer Schichtdicke von etwa 40 μm wurde eine Ausbeute von 31,4 Lumen/Watt erzielt. Gleichartige Messungen an einem Beispiel von handelsüblichem Silikat-Leuchtstoff P1 ergaben nur 17,0 lm/W. Dieses letztgenannte Ergebnis stimmt mit Daten überein, wie sie durch R.C. Alig et al. in J. Electrochem. Soc. 124, 1136, 1977 und durch W. Lehmann in J. Electrochem. Soc. 118, 1164, 1971 berichtet werden. Die absolute Lumineszenz-Ausbeute wurde für einen dicken Leuchtschirm durch A. Bril et al. in Philips Res. Report 7, 401, 1952 berechnet und durch H.C. Hamaker in Philips Res. Report 2, 55, 1947. Für eine Elektronenstrahlanregung mit 10 KeV werden Absorptions- und Streuverluste in der Leuchtstoffschicht mit einer Herabsetzung von 85% des Wirkungsgrades in Betracht gezogen.

Durch zurzeit verfügbare theoretische Modelle ist der Wirkungsgrad oder die Ausbeute von Silikat-Leuchtstoffen nicht erklärbar. Es kann daher auch hier keine genaue Erklärung dafür gegeben werden, warum die mit $AlPO_4$ und anderen $M^{+3}M^{+5}O_4$ substituierten Leuchtstoffe bessere Ausbeuten zeigen. Es werden jedoch verschiedene Beobachtungen mitgeteilt, die ein besseres Verständnis für den Wirkungsgrad von erfindungsgemässen Leuchtstoffen ermöglichen. Die beste Ausbeute wird erzielt, wenn die Konzentrationen an $Mn^{++}$ und an $M^{+3}M^{+5}O_4$, beispielsweise $AlPO_4$ etwa gleich sind und beispielsweise etwa 1% betragen. Daraus könnte man auf einen Effekt ähnlich der Paarbildung im Gitter schliessen, der die Anhäufung von Mn verhindert und so die entsprechende Konzentration der $Mn^{++}$-Emission unterdrückt. Die $M^{+3}M^{+5}O_4$ Substitution, beispielsweise mit $AlPO_4$, mag durchweg Sauerstoff-Fehlstellen oder Paare solcher Fehlstellen zum Verschwinden bringen, welche in anderen Leuchtstoffmaterialien bekanntlich als Zentren für nichtstrahlende Prozesse dienen. Solche nichtstrahlenden Prozesse werden beispielsweise von M. Tamatani et al. in J. Luminescence, 12/13, 935 (1976) und von A.M. Gurvich in J. Luminescence, 15, 187, (1977) beschrieben.

Wenn reines $Zn_2SiO_4$:Mn im Gleichgewicht mit ZnO präpariert wird oder wenn es unvollständig in einer zweiten Phase mit ZnO reagiert, dann wird eine scharfe Unterdrückung der $Mn^{++}$-Lumineszenz beobachtet. Wenn es jedoch im Gleichgewicht mit $SiO_2$ präpariert wird oder $SiO_2$ die zweite Phase bildet, dann wird normale $Mn^{++}$-Lumineszenz beobachtet. Augenscheinlich besteht eine leichte Löslichkeit von ZnO in $Zn_2SiO_4$ derart, dass $Zn^{+2}$ Ionen substituieren und Gitterplätze der $Si^{+4}$ Ionen einnehmen, wobei sie eine Sauerstoff-Fehlstelle bilden. Vermutlich wird ein kleiner Anteil solcher Fehlstellen beim Vorliegen von $SiO_2$ im Überschuss sogar bei hohen Brenntemperaturen bestehen bleiben und so die Ausbeute des Leuchtstoffes herabsetzen.

Theoretisch kann die Zugabe von $AlPO_4$ in geringen Konzentrationen von beispielsweise etwa 0,5% diese Fehlstellen zum Verschwinden bringen, indem ein $Si^{+4}$ Ion durch ein $P^{+5}$ Ion substituiert wird und vielleicht ein $Zn^{+2}$ Ion durch ein $Al^{+3}$ Ion. Jedenfalls werden Fehlstellen praktisch durch die Zugabe eines kleinen Anteils von $AlPO_4$ zum Verschwinden gebracht. Weiteres $AlPO_4$ substituiert im Gitter $SiO_2$ innerhalb der Grenzen der Löslichkeit von etwa 10 bis 15%. Aus diesem Grunde verbessert sich nicht die Ausbeute der Lumineszenz, wenn die Konzentration an $AlPO_4$ 1% übersteigt.

Die Lumineszenzausbeute wird auch verbessert, wenn andere Kombinationen von Oxiden aus Elementen der Gruppen IIIA und VA erfindungsgemäss in $Zn_2SiO_4$:Mn das $SiO_2$ substituieren, wie beispielsweise $GaPO_4$, $BPO_4$ und $GaAsO_4$. Der Wirkungsgrad der Lumineszenz wird ebenfalls verbessert, jedoch nicht so gut wie bei der Substitution mit $AlPO_4$. Wahrscheinlich verändern die substituierenden anderen Materialien die Parameter des Gitters von $Zn_2SiO_4$, während $AlPO_4$ das Gitter nicht verformt. In mit Mn dotiertem $Zn_2SiO_4$ sind offensichtlich die Gitterabstände der nächsten Nachbarn von Mangan und Sauerstoff sowie die Bindungswinkel optimal für eine wirksame $Mn^{++}$-Emission. Jede andere Substitution mit Kombinationen von Ionen, welche das Gitter stören, bewirken nicht eine solche Verbesserung des Wirkungsgrades der Lumineszenz wie $AlPO_4$, wobei die Gitterordnung am besten erhalten bleibt.

**Patentansprüche**

1. Lumineszenter Leuchtstoff auf der Basis von mit Mangan dotiertem Zinksilikat ($Zn_2SiO_4$:Mn), gekennzeichnet durch eine kristalline feste Lösung mit Willemitstruktur, in der ein Teil des Siliziums durch Ionenpaare aus den Gruppen IIIA und VA des Periodischen Systems der Elemente substituiert ist.

2. Leuchtstoff nach Anspruch 1, dadurch gekennzeichnet, dass die genannte feste Lösung ausser Mn Mischkristalle der Art $Zn_2SiO_4$-$Zn_2$-$(M^{+3}_{0,5}M^{+5}_{0,5})O_4$ enthält, wobei $M^{+3}$ und $M^{+5}$ lonen aus den Gruppen IIIA und VA des Periodischen Systems der Elemente sind.

3. Leuchtstoff nach Anspruch 2, gekennzeichnet durch die Zusammensetzung $Zn_{2-y}Mn_ySi_{1-2x}(Z)_xO_4$, wobei Z aus der Gruppe AlP, GaAs, BP, GaP, BAs, AlAs gewählt ist und wobei $y \leq 0,25$ und $x \leq 0,5$ ist.

4. Leuchtstoff nach Anspruch 3, gekennzeichnet durch die Zusammensetzung $Zn_{2-y}Mn_y$ $Si_{1-2x}Al_x$-$P_xO_4$, wobei $y \leq 0,25$ und $x \leq 0,5$ ist.

5. Verfahren zur Herstellung eines Leuchtstoffes nach Anspruch 1, gekennzeichnet durch die Schritte:
- Herstellung von $M^{+3}M^{+5}O_4$ aus $M^{+3}$-Oxid und $M^{+5}$-Oxid, wobei $M^{+3}$ und $M^{+5}$ lonen aus den Gruppen IIIA und VA des Periodischen Systems der Elemente sind.
- Reaktion von $ZnCO_3$, $SiO_2$ und $MnCO_3$ mit dem genannten $M^{+3}M^{+5}O_4$, um daraus $Zn_{2-y}Mn_ySi_{1-2x}$-$M^{+3}_xM^{+5}_xO_4$ zu gewinnen, wobei $y \leq 0,25$ und $x \leq 0,5$ ist.

6. Verfahren nach Anspruch 5, gekennzeichnet durch die Reaktion von $ZnCO_3$, $SiO_2$, $Al_2O_3$, $MnCO_3$ und $P_2O_5$, um $Zn_{2-y}Mn_ySi_{1-2x}Al_xP_xO_4$ zu gewinnen, wobei $y \leq 0,25$ und $x \leq 0,5$ ist.

## Claims

1. A manganese activated zinc silicate ($Zn_2SiO_4$:Mn) based luminescent material, characterized by a crystalline solid solution having a willemite structure, in which a portion of the silicon is substituted by ion pairs from groups IIIA and VA of the periodic table of elements.

2. A luminescent material in accordance with claim 1, characterized in that said solution comprises, besides Mn, mixed crystals of the kind $Zn_2SiO_4$-$Zn_2(M^{+3}_{0,5}M^{+5}_{0,5})O_4$, wherein $M^{+3}$ and $M^{+5}$ are elements from groups IIIA and VA of the periodic table of elements.

3. A luminescent material in accordance with claim 2, characterized by the composition $Zn_{2-y}Mn_ySi_{1-2x}(Z)_xO_4$, wherein Z is chosen from the group AlP, GaAs, BP, GaP, BAs, AlAs, and wherein $y \leq 0.25$ and $x \leq 0.5$.

4. A luminescent material in accordance with claim 3, characterized by the composition $Zn_{2-y}Mn_ySi_{1-2x}Al_xP_xO_4$, wherein $y \leq 0.25$ and $x \leq 0.5$.

5. A process for preparing a luminescent material in accordance with claim 1, characterized by the steps of:
- preparing $M^{+3}M^{+5}O_4$ from $M^{+3}$ oxide and $M^{+5}$ oxide, wherein $M^{+3}$ and $M^{+5}$ are ions from groups IIIA and VA of the periodic table of elements,
- reacting $ZnCO_3$, $SiO_2$, and $MnCO_3$ with said $M^{+3}M^{+5}O_4$ to obtain $Zn_{2-y}Mn_ySi_{1-2x}M^{+3}_xM^{+5}_xO_4$, wherein $y \leq 0.25$ and $x \leq 0.5$.

6. A process in accordance with claim 5, characterized by reacting $ZnCO_3$, $SiO_2$, $Al_2O_3$, $MnCO_3$ and $P_2O_5$ to obtain $Zn_{2-y}Mn_ySi_{1-2x}Al_xP_xO_4$, wherein $y \leq 0.25$ and $x \leq 0.5$.

## Revendications

1. Matériau luminescent à base de silicate de zinc activé au manganèse ($Zn_2SiO_4$:Mn), caractérisé par une solution solide cristalline à structure de willémite, dans laquelle une partie du silicium est substituée par des paires d'ions des groupes IIIA et VA de la classification périodique des éléments.

2. Matériau luminescent selon la revendication 1, caractérisé en ce que ladite solution liquide contient, en plus du Mn, des cristaux mixtes du type $Zn_2SiO_4ZN_2(M^{+3}_{0,5}M^{+5}_{0,5})O_4$, $M^{+3}$ et $M^{+5}$ étant des ions choisis dans les groupes IIIA et VA de la classification périodique des éléments.

3. Matériau luminescent selon la revendication 2, caractérisé par la composition $Zn_{2-y}Mn_ySi_{1-2x}O_4$, Z étant choisi dans le groupe comprenant, AlP, GaAs, BP, GaP, BAs, AlAs, et dans laquelle $y \leq 0,25$ et $x \leq 0,5$.

4. Matériau luminescent selon la revendication 3, caractérisé par la composition $Zn_{2-y}Mn_ySi_{1-2x}Al_xP_xO_4$, dans laquelle $y \leq 0,25$ et $x \leq 0,5$.

5. Procédé pour fabriquer un matériau luminescent selon la revendication 1, caractérisé par les étapes suivantes:
- fabrication de $M^{+3}M^{+5}O_4$ à partir d'un oxyde de $M^{+3}$ et d'un oxyde de $M^{+5}$, $M^{+3}$ et $M^{+5}$ étant des ions choisis dans les grupes IIIA et VA de la classification périodique des éléments,
- réaction de $ZnCO_3$, $SiO_2$, et $MnCO_3$ avec ledit $M^{+3}M^{+5}O_4$ pour en obtenir du $Zn_{2-y}Mn_ySi_{1-2x}M^{+3}_xM^{+5}_xO_4$, dans lequel $y \leq 0,25$ et $x \leq 0,5$.

6. Procédé selon la revendication 5, caractérisé par la réaction de $ZnCO_3$, $SiO_2$, $Al_2O_3$, $MnCO_3$ et $P_2O_5$ pour obtenir du $Zn_{2-y}Mn_ySi_{1-2x}Al_xP_xO_4$, dans lequel $y \leq 0,25$ et $x \leq 0,5$.

FIG. 1

$M_2O_3$

$M^3M^5O_4$

$Zn_2(M^{+3}_{0,5}M^{+5}_{0,5})O_4$

$SiO_2$

$M_2O_5$

$Zn_2SiO_4$

$ZnO$

| $M_2O_3(M^{+3})$ | $M_2O_5(M^{+5})$ |
|---|---|
| $B_2O_3$ | $P_2O_5$ |
| $Al_2O_3$ | $As_2O_5$ |
| $Ga_2O_3$ | |

# FIG. 2A

FLÜSSIGKEIT UND WILLEMIT

TEMPERATUR (°C)

WILLEMIT
FESTE LÖSUNG

MOL % $Zn_2Al_{0,5}P_{0,5}O_4$

# FIG. 2B

GITTERKONSTANTEN (Å)

$a_o$

$c_o$

MOL % $Zn_2Al_{0,5}P_{0,5}O_4$

FIG.3

0 015 382

# FIG. 4